# EUROPEAN PATENT SPECIFICATION

(11) **EP 1 077 515 B1**
(45) Date of publication and mention of the grant of the patent: **23.09.2009**
(21) Application number: 00202868.6
(22) Date of filing: 16.08.2000
(51) Int. Cl.: H02B 1/06, B65D 43/16

(54) **Cabinet with hingeable cover for accommodating electrical components**
Gehäuse mit schwenkbarem Deckel zur Aufnahme von elektrischen Bauteilen
Boîtier muni d'un couvercle à charnières pour composants électriques

(30) Priority: 19.08.1999 NL 1012867
(43) Date of publication of application: 21.02.2001
(73) Proprietor: Eaton Electric B.V., 7559 SC Hengelo (NL)
(72) Inventor: Kippers, Mannes, 7461 GM Rijssen (NL); Hoekstra, Jan Willem, 7555 BT Hengelo (NL); Alferink, Henricus Antonius, 7421 LC Deventer (NL)
(74) Representative: Tabeling, Marcella M.J.

(56) References cited:
- DE-U- 8 614 142
- US-A- 4 291 817

## Description

The invention relates to a cabinet for housing electrical components, comprising a tray having two first side walls located opposite one another and two second side walls running transversely to the first side walls, a cover hingeably attached to one of the first side walls, the hinge points being a distance away from one of the second side walls which is less than the distance between the second side walls, and an elastically deformable continuous sealing rim which runs some distance away from the side walls and is oriented towards the cover and which is in sealing contact with the cover when the cover is closed, the distance from the hinge points to the nearest second side wall being less than the distance from the sealing rim to said second side wall.

Cabinets of this type are generally known and are used when it is important that the interior of the cabinet is sealed as well as possible against moisture and/or dust. With these cabinets when the cover is closed it is releasably secured by securing elements at the free corners of the cover and securing elements on the first side walls of the tray, that is to say opposite the side walls where the hinge points for the cover have also been fitted, which securing elements on the side walls interact with the securing elements at the free corners.

However, this known solution has the disadvantage that, after some time, the seal between cover and sealing rim no longer meets the sealing requirements as a result of plastic deformation of the cover and the deviations in tolerance achieved during production. Moreover, likewise because of the plastic deformation, the seal between sealing rim and cover will decrease substantially towards the centre in the case of wide covers with long sides. Screws which are fitted at the edge of the cover and, by screwing into the tray, press the cover between the securing elements onto the sealing rim are a known solution to this problem. Depending on the construction, however, this can have the disadvantage that additional room is taken up in the tray as a result. Moreover, as a result of this solution opening and closing of the cover is laborious.

From the standpoint of production, stockholding and ease of assembly, the aim is to construct cover and tray in such a way that these display mirror symmetry with respect to the mid line between the first side walls. This has the advantage that the desired hinging direction can be achieved with only one design of tray and cover. In this way the direction in which the cover opens and closes can easily be changed at the installation site if this would be better.

From the European patent application EP 0,123,788 a tray for accommodating electrical components and a cover associated to the tray are known. The cover is hingeable in hinge points at an upper portion of the tray. The tray is provided with a gripping ridge gripping behind a ridge in the upper portion of the tray.

The hinge points are constituted by hinge pins (66) and accommodating spaces. The hinge pins could be pressed in the accommodating spaces through slots having a gap being somewhat smaller than the diameter of the hinge pins.

Furthermore, the upper portion of the tray is provided with a sealing rim. In the closed condition of the cover the cover lies sealingly against the sealing rim.

The aim of the invention is to provide a cabinet of the type mentioned in the preamble with which the abovementioned disadvantages and problems are avoided while retaining the advantages of the known cabinets. This aim is achieved according to the invention in that first tray ridges are present which are fixed with respect to the tray and run parallel to and are essentially distributed over the length of a sealing rim section, which section extends parallel to and closest to the second side wall located furthest away from and opposite the hinge points and in that the cover is provided with first cover ridges which, when the cover is closed, engage behind the tray ridges in a releasable manner and on engagement press the cover against the sealing rim to produce a seal.

By this means the forces for pressing the cover onto the sealing rim in the longitudinal direction of the cover ridge and tray ridge, which forces serve for sealing, are uniformly distributed, as a result of which a much more reliable seal is obtained, even in the long term. Moreover, as a result of the uniform force distribution a high point load with a high bending moment can be prevented and thus a lower maximum force can suffice, so that the cover and the tray can be of more lightweight construction. It has been found that by using the ridges of the invention a dust and water seal can be obtained which meets the standards employed for these, for example the IP56 standard.

According to EP 0,123,788 loose hinge parts are used to be affixed by screwing on the tray. This means that additional loose components en thus additional mounting steps are necessary. When the cover must be changed regarding the rotation direction the hinge parts should thus be disassembled and assembled.

According to an embodiment of the invention one hinge part is in form of a protruding axis portion or pin (7, 8, 24, 25), which is moulded to the tray, while the other hinge part is in form of a hole (9, 10) formed in the cover. Because the tray is symmetrical the protruding axis parts opposite of the hinge points could be used as abutting and outlining points in co-operation with a recess in the cover (bottom edge 33), which improves the mechanical stability of the whole cabinet.

In the cabinet of EP 0,123,788 the cover at the side of the hinge points is affixed to the corresponding side wall only at the hinge points. When the side wall is somewhat longer a very high change exists that the cover can bend at that wall side, by which subsequently the sealing does not suffice any more. The tray according to an embodiment of the invention, however, comprises a ridge (12, 19), distributed over de whole length, which together with a complementary ridge (21) prevents the cover from bending, by which the sealing is completely secured.

The locking of the cover is carried out by means of three locking cams in the tray co-operating with flexible lips in the cover in the cabinet according to EP 0,123,788. The latter could be unlocked by means of the hand grip by elastical deformation. The locking is carried out here on three places and in a cabinet having long side walls this could result in bending and thus a decreased sealing. In order to prevent that bending the locking at more positions should be necessary. Because of the complex shape of the hand grip that would also result in a mechanically poor locking in addition to a complex shape.

According to an embodiment of the invention the locking is implemented with a cover ridge, which extends over nearly the whole side wall length, in co-operation with the tray ridges extending also over nearly the whole side wall length. Consequently not only the sealing is guaranteed, but the sealing is also obtained in a very simple way.

Preferably, a second series of tray ridges, corresponding to the first series, is arranged close to that section of the sealing rim which extends along the second side wall located closest to the hinge points. When the cover is closed, a second cover ridge engages behind the second series of tray ridges in a releasable manner. A reliable seal between the hinge points is also obtained by this means. Moreover, the stress on the hinge components is relieved as far as the forces of reaction are concerned which are produced when the cover is closed and the cover is pressed onto the sealing rim. The hinge points are consequently less susceptible to wear.

Depending on the length of the cover, a preferred embodiment of the invention provides for combination of the tray ridges to give one or more tray ridge sections uniformly distributed over the length of the sealing rim, as a result of which the tray can be produced more simply.

The tray ridges can be provided on the one side, the outside, or the other side, the inside, of the sealing rim. Preferably, the tray ridges are shifted as far as possible towards the associated second side wall and they are preferably fixed to the associated second side wall or moulded thereon. As a result the space in the tray inside the continuous sealing rim can be as large as possible. For considerations of advantageous symmetry, the second series of tray ridges are fixed to or moulded onto the side wall of the tray in the same way as the first tray ridges.

The cover ridges are preferably also brought towards the outside as far as possible and preferably are fixed to or moulded onto the associated cover side walls.

With this arrangement the second cover ridge runs perpendicularly to the associated side wall outwards from the cover. In order, on the one hand, to secure the cover easily against the associated tray ridges and, on the other hand, also to release the cover easily again from the associated tray ridges, the free outward-facing edge of the first cover ridge is rounded or chamfered on both sides. By making the chamfered or rounded surface oriented towards the underside of the cover to differ from the chamfered or rounded surface oriented towards the top of the cover, the cover can be secured more easily and nevertheless is not able to spring open too easily. This thus provides an additional degree of freedom when sizing the first cover ridge.

On the grounds of the symmetry considerations already mentioned above, hinge elements are also fitted on the opposite side of the tray, which hinge elements are able to interact with the hinge elements on the cover.

The simplest embodiment of the hinge points is a hinge pin on the first side wall of the tray, on the one hand, and a hole in the associated upright cover wall, on the other hand.

In order to facilitate snapping home of the cover, that is to say snapping the pin home into the hinge hole, a recess which is open to the outside is made in the cover side wall provided with the hinge hole, the depth of which recess is less than the thickness of the cover side wall and which recess extends from the hole in the direction of the nearest cover side wall running perpendicularly to the said cover side wall.

In the further dependent claims an aesthetically acceptable slot which is preferably to be used is made in the cover in order easily to pull open said cover from the secured, closed position.

According to EP 0,123,788 the surfaces by which the locking cams and the flexible lips in the cover engage each other are flat. This makes both the locking and unlocking more difficult and results in earlier wearing. According to an embodiment of the invention the chamfered or rounded surfaces give a solution which makes the unlocking easier at the one side and at the other side offers a good locking.

The cover according to EP 0,123,788 is provided with a handgrip which is operable from the outside, while according to the embodiment of the invention the gripping of the cover for opening it takes places from the inside. The invention has thereby the advantage that an adjacent cabinet wall or a wall against which the cabinet is mounted does not give problems in opening the cover. Moreover the locking point is at the greatest possible distance from the hinge point. This means that the force-path ratio is optimal and the force on the locking point is thus minimal. This has a favourable influence on the locking and delocking and also regarding the wearing.

Preferably, the cover is elastically deformable at least in the direction of the second cover ridge, so that the cover can be pulled open from the secured, closed position like a sort of zip fastener by pulling on a corner point of the cover.

The invention will be explained in more detail below with reference to the drawings. In the drawings:
- Figure 1 shows an embodiment of a cabinet according to the invention without cover;
- Figure 2 shows a cross-section along the line II-II in Figure 1;
- Figure 3 shows an embodiment of a cover according to the invention;
- Figure 4 shows a cross-section along the line IV-IV in Figure 3;
- Figure 5 shows the detail V in Figure 4 on a large scale, and
- Figure 6 shows an embodiment of the cabinet according to the invention.

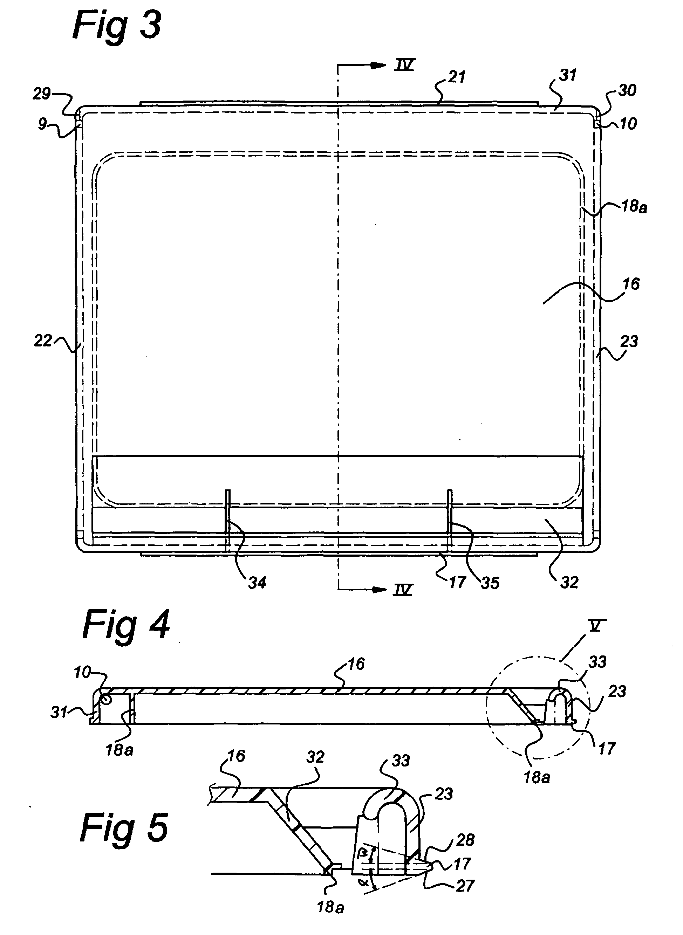

A generally known cabinet with a cover that can be hinged open will first be discussed. Such a cabinet can be used to house electrical components. The cabinet comprises a tray 1 having two first side walls 2, 3 located opposite one another and two side walls 4, 5 running transversely thereto and a base 6. A cover is hingeably attached to the tray by means of hinge elements 7, 8 on the two side walls 2, 3 and hinge elements 9, 10 on the cover interacting with the hinge elements 7, 8 (see Figure 3).

The tray 1 is also provided with a continuous elastically deformable sealing rim 11, which when the cover is closed is in contact with said cover or a portion thereof and in this position is compressed somewhat by the cover. This rim serves to provide the requisite seal against dust and moisture.

The hinge elements 7, 8 are located a shorter distance away from the second side wall 4 of the tray of the cabinet than is the section 15 of the sealing rim 11 running parallel thereto.

In the case of known cabinets the cover is secured in the closed position by means of securing elements provided at the free corners of the cover and securing elements on the first side walls 2, 3 of the tray 1 interacting with the securing elements at the free corners, in such a way that the cover is in contact with the sealing rim so as to produce a seal.

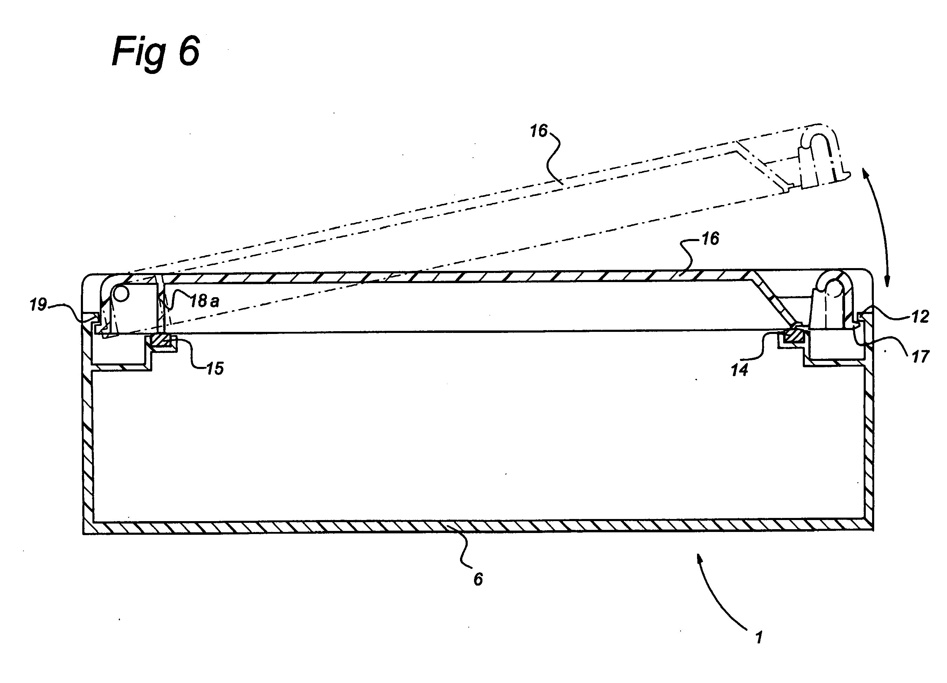

According to the invention the tray 1 of the cabinet is provided with first tray ridges which essentially extend over the length of the sealing rim section and in the embodiment shown consist of multiple tray ridge sections 12, 13. When the cover 16 is in the closed position, a first cover ridge 17 on the cover 16 engages behind the first tray ridge sections 12, 13; see also Figure 6. When the cover 16 is in this secured, closed position, an edge 18a which runs all round presses against the sealing rim 11, 14, 15, 18 so as to produce a seal. As a result of the use of the tray ridge and cover ridge a constant distribution of the force is obtained viewed in the longitudinal direction of the sealing rim section 14. By this means a seal can be achieved which meets the desired guidelines and standards, such as, for example, the IP56 standard.

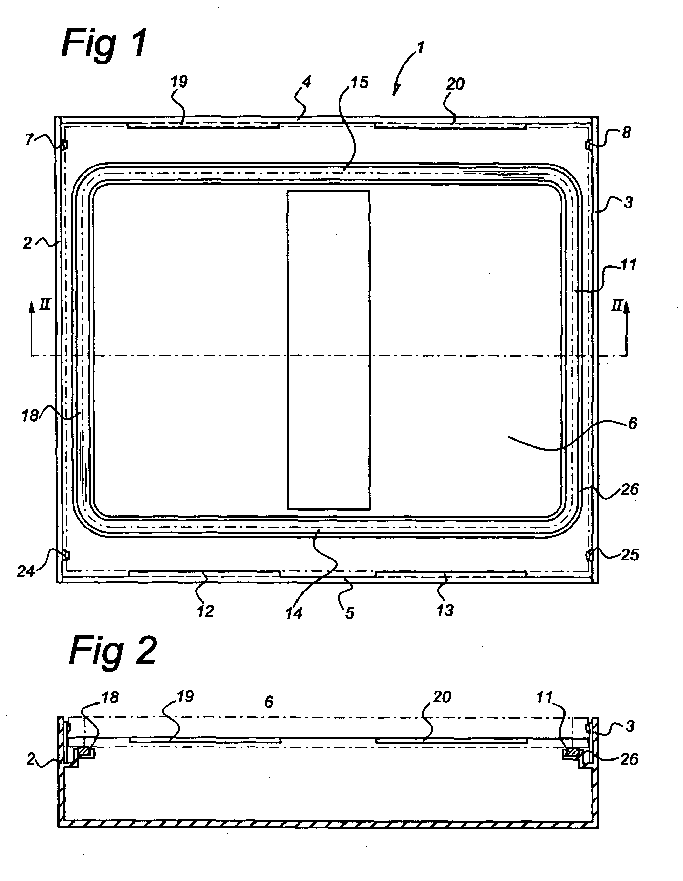

In order yet further to improve the seal, the tray 1 of the cabinet is provided with a second series of tray ridges which in the embodiment in Figure 1 consists of a series of second tray ridge sections 19, 20. When the cover is closed a second cover ridge 21 interacts with this second series of tray ridge sections 19, 20. In this closed position, the cover edge 18a is pressed uniformly onto the flexible sealing rim 11, 14, 15, 18 of the tray 1.

The cover ridges 17, 21 have been made in one piece, but these can, of course, consist of two or more pieces, such as the two pieces of the tray ridges 12, 13, 19, 20. Likewise, the tray ridges can be combined to give pieces of a greater length, which can offer advantages from the production engineering standpoint.

In practice it is frequently the case that the cover is not fixed to the tray itself but is fixed to the tray via an intermediate edge. The reason for this is that use can then be made of a standard tray without hinges which is also used for fixed covers. Although the invention primarily addresses direct fixing to the tray it is, of course, also suitable for fixing to the tray via an intermediate edge.

The hinge elements on the tray 1 and the cover 16 are formed, on the one hand, by pins 7, 8 which are fixed to or moulded onto the first side walls 2 and 3, respectively. When the tray and cover have been assembled together, these hinge pins 7, 8 are accommodated in the hinge holes 9, 10 made in the cover side walls 22, 23. In order to obtain an advantageous symmetrical tray 1, the first and second tray ridge sections 12, 13, 19, 20 are made identical, whilst additional hinge pins 24, 25 are also fixed to or moulded onto the first side walls 2, 3 of the tray 1. As a result of this the cover can also be fitted turned through 180°.

The elastically deformable sealing rim 11, 14, 15, 18 is accommodated in a channel 26 which runs all round and which preferably is integral with the base 6 and the side walls 2, 3, 4, 5 of the tray 1.

The entire cabinet is shown in Figure 6, the cover 16 having been fitted on the tray 1. The cover 16 is shown in the closed position by continuous lines and in the partially open position by broken lines. The interaction between the tray ridges 12, 19 on the one hand and the cover ridges 17, 21 on the other hand is clearly apparent in Figure 6. It can clearly be seen that in the said closed position the free edge of the edge 18a of the cover 16 presses against the elastically deformable sealing rim 14, 15 and thus compresses the sealing rim 14, 15 to some extent.

Detail V of the cover 16 shown in Figure 4 is shown on a larger scale in Figure 5. It can be seen from this figure that the ridge 17 has two chamfers 27, 28, chamfer 27 being at an oblique angle α which is larger than the angle β of the chamfer 28. The function of the chamfer 27 is that the cover 16 can be snapped home more easily than would be the case if there were no chamfer. The force necessary to snap home the cover can be set to the desired value by selection of the angle α. The force needed for snap release can be set by selection of the angle β. Because the angle α is greater than the angle β, snapping home the cover 16 is easier than snap release. The angle β must be such that the force of reaction generated by the sealing rim and the cover does not push the cover open. Of course, instead of a chamfer it is also possible to use a rounding or a combination of chamfer and rounding.

As is shown in Figure 3, the cover is provided with recesses 29, 30 in the side walls 22, 23 of the cover 16, which recesses run from the hinge holes 9, 10 in the direction of the cover side wall 31. By means of these recesses 29, 30 the hinge pins 7, 8 or 24, 25 can be pushed more easily into the holes 9, 10 of the cover 16.

Gripping means are used in the cover in order to hinge the cover 16 from the closed position into an open position. These gripping means are constructed as follows:
- The cover slopes downwards over a sloping section 32 towards the cover edge 18a interacting with the elastic sealing rim, at which point a slot-shaped space follows. On the other side of the slot-shaped space the cover side wall 23 is provided at the top with a curved section 33. In the embodiment in Figure 3 there are three slot-shaped spaces which are separated from one another by the reinforcing walls 34, 35. The cover can then be grasped behind the curved sections 33 in order to hinge it from the secured, closed position into the open position. If the cover is flexible it is preferable to grasp the cover at a free corner point behind the curved section 33 and to pull the cover outwards at this point, the securing means then being released gradually from the corner point where the pull is exerted, such that the securing means, as it were, function like an opening zip fastener, so that the force required for opening will be very small. Of course, this works only if the cover is somewhat elastically deformable, at least in the direction of the second cover ridge.

## Claims

1. Cabinet for housing electrical components, comprising a tray (1) having two first side walls (2,3) located opposite one another and two second side walls (4,5) running transversely to the first side walls, a cover (16) hingeably attached to one of the first side walls, the hinge points (7,8) being a distance away from one of the second side walls (4) which is less than the distance between the second side walls, and an elastically deformable continuous sealing rim (11,14,15,18) which runs some distance away from the side walls (2,3,4,5) and is oriented towards the cover (16) and which is in sealing contact with the cover when the cover (16) is closed, the distance from the hinge points (7,8) to the nearest second side wall (4) being less than the distance from the sealing rim (11,14,15,18) to said second side wall (4), **characterised in that** first tray ridges (12,13) are present which are fixed with respect to the tray and run parallel to and are essentially distributed over the length of a sealing rim section (14), which section extends parallel to and closest to the second side wall (5) located furthest away from and opposite the hinge points and **in that** the cover (16) is provided with first cover ridges (17) which, when the cover (16) is closed, engage behind the tray ridges (12,13) in a releasable manner and on engagement press the cover against the sealing rim (11,14,15,18) to produce a seal.

2. Cabinet according to claim 1, **characterised in that** the hinge points (7, 8) are constituted by a pin (7, 8, 24, 25) moulded to the tray (1) or cover (16) and a hole (9, 10) provided in the cover (16) respectively the tray (1) for accommodating the pen (7, 8, 24, 25) rotatable.

3. Cabinet according to Claim 1 or 2, **characterised in that** a second series of tray ridges (19,20), corresponding to the first series, is arranged close to that section of the sealing rim (15) which extends along the second side wall (4) located closest to the hinge points (7,8) and a second series of cover ridges (21) engaging behind said tray ridges (19,20) in a releasable manner when the cover (16) is closed.

4. Cabinet according to Claim 1, 2 or 3, **characterised in that** the tray ridges and/or cover ridges are combined to give one or more tray ridge sections or cover ridge sections uniformly distributed over the length of the sealing rim.

5. Cabinet according to Claim 1, 2, 3 or 4, **characterised in that** the tray ridge(s) (12,13 and 19,20, respectively) is/are attached to the associated second side wall (4 and 5, respectively) and runs/run perpendicularly to this side wall in the inward direction of the tray (1).

6. Cabinet according to Claim 5, **characterised in that** the tray ridge(s) (12,13 and 19,20, respectively) is/are moulded onto the associated second side wall (5 and 4, respectively).

7. Cabinet according to Claim 3, 4, 5 or 6, **characterised in that** the first and/or second cover ridge(s) (17,21) is/are moulded onto an upright cover wall (32,31) and runs/run perpendicularly to this side wall in the outward direction of the cover (16).

8. Cabinet according to Claim 7, **characterised in that** the cover ridge(s) (17,21) is/are moulded onto the cover wall (32,31).

9. Cabinet according to one of Claims 3-8, **characterised in that** the second cover ridge(s) (21) runs/run perpendicularly to the associated side wall (31) in the outward direction of the cover (16) and is/are chamfered or rounded on both sides (27,28) at the free outward-facing edge.

10. Cabinet according to Claim 9, **characterised in that** the chamfered or rounded surface (27) oriented towards the underside of the cover encloses a larger angle (α) with the inward-directed perpendicular to the free outward-facing edge of the first cover ridge(s) (17) than does the chamfered or rounded surface (28;β) oriented towards the top of the cover.

11. Cabinet according to one of Claims 1-10, **characterised in that** hinge elements (24,25) are also fitted on the first side walls (2,3) on the opposite side of the tray (1), which hinge elements (24,25) are able to interact with the hinge elements (9,10) of the cover (16).

12. Cabinet according to Claim 11, **characterised in that** the hinge point of the cover (16) is formed by a pin (7,8) which is mounted on the associated first side wall (2,3) of the tray (1) and is rotatably accommodated in a hole (10) in an associated upright cover side wall (22,23).

13. Cabinet according to Claim 11, **characterised in that** a recess which is open to the outside is made in the cover side wall provided with the hinge hole, the depth of which recess is less than the thickness of the cover side wall and which recess extends from the hole in the direction of the nearest cover side wall running perpendicularly to the said cover side wall.

14. Cabinet according to one of Claims 1-13, **characterised in that** the top surface of the cover (16) is provided, the maximum possible distance away from the hinge pin, with a row of slot-shaped spaces which run parallel to the hinge pin and are separated from one another by joining walls (34,35).

15. Cabinet according to Claim 14, **characterised in that that** part of the cover top wall which adjoins the slot-shaped spaces runs obliquely inwards.

16. Cabinet according to Claim 14 or 15, **characterised in that that** part of the cover top wall which adjoins the slot-shaped spaces has an inwardly curved shape.

17. Cabinet according to one of the preceding claims, **characterised in that** the cover (16) is elastically deformable at least in the direction of the first cover ridge(s) (17).

## Patentansprüche

1. Das Gehäuse zur Aufnahme von elektrischen Bauteilen besteht aus einem Behälter (1) mit zwei ersten Seitenwänden (2, 3), die einander gegenüber stehen, und zwei zweiten Seitenwänden (4, 5), die quer zu den ersten Seitenwänden verlaufen, einem Deckel (16), der schwenkbar an einer der ersten Seitenwände angebracht ist, wobei die Gelenkpunkte (7, 8) sich in einem Abstand zu einer der zweiten Seitenwände befinden (4), der geringer als der Abstand zwischen den zweiten Seitenwänden ist, und einem elastisch verformbaren kontinuierlichen Dichtungsrand (11, 14, 15, 18), der in einem gewissen Abstand zu den Seitenwänden verläuft (2, 3, 4, 5) und in Richtung des Deckels (16) orientiert ist und einen Dichtungskontakt zu dem Deckel bildet, wenn der Deckel (16) geschlossen ist, wobei der Abstand zwischen den Gelenkpunkten (7, 8) und der nächstgelegenen zweiten Seitenwand (4) kleiner als der Abstand zwischen dem Dichtungsrand (11, 14, 15, 18) und der genannten zweiten Seitenwand (4) ist, **dadurch gekennzeichnet ist, dass** erste Behälterrippen (12, 13) vorhanden sind, die an dem Behälter angebracht sind, parallel dazu verlaufen und im Wesentlichen über die Länge eines Dichtungsrandabschnitts (14) verteilt sind, wobei dieser Abschnitt parallel zu und möglichst nahe zur zweiten Seitenwand (5) verläuft, die am weitesten entfernt und gegenüber den Gelenkpunkten positioniert ist, und dass der Deckel (16) mit ersten Abdeckrippen (17) ausgestattet ist, die, wenn der Deckel (16) geschlossen ist, hinter den Behälterrippen in lösbarer Weise einrasten (12, 13) und durch Druck auf den Deckel gegen den Dichtungsrand (11, 14, 15, 18) eine Dichtung bewirken.

2. Das Gehäuse nach Patentanspruch 1 ist **dadurch gekennzeichnet, dass** die Gelenkpunkte (7, 8) aus einem Stift (7, 8, 24, 25), der zu dem Behälter (1) oder Deckel (16) geformt ist, und einem Loch (9, 10), das in dem Deckel (16) beziehungsweise dem Behälter (1) vorgesehen ist, damit der Stift (7, 8, 24, 25) drehbar ist, bestehen.

3. Das Gehäuse nach Patentanspruch 1 oder 2 ist **dadurch gekennzeichnet, dass** eine zweite Reihe von Behälterrippen (19, 20), die der ersten Reihe entspricht, vorhanden ist in der Nähe von diesem Abschnitt des Dichtungsrands (15), der entlang der zweiten Seitenwand (4) verläuft, die sich möglichst nahe bei den Gelenkpunkten (7, 8) befindet, und dass eine zweite Reihe von Abdeckrippen (21) hinter den Behälterrippen (19, 20) in lösbarer Weise einrasten, wenn der Deckel (16) geschlossen ist.

4. Das Gehäuse nach Patentanspruch 1, 2 oder 3 ist **dadurch gekennzeichnet, dass** die Behälterrippen und/oder die Abdeckrippen so kombiniert sind, dass sie eine oder mehrere Abschnitte mit Behälterrippen oder Abschnitte mit Abdeckrippen ergeben, die über die Länge des Dichtungsrands gleichmäßig verteilt sind.

5. Das Gehäuse nach Patentanspruch 1, 2, 3 oder 4 ist **dadurch gekennzeichnet, dass** die Behälterrippe(n) (12, 13 beziehungsweise 19, 20) an der dazugehörigen zweiten Seitenwand (4 beziehungsweise 5) befestigt ist/sind und im rechten Winkel zu dieser Seitenwand in der inneren Richtung des Behälters (1) verläuft / verlaufen.

6. Das Gehäuse nach Patentanspruch 5 ist **dadurch gekennzeichnet, dass** die Behälterrippe(n) (12, 13 beziehungsweise 19, 20) an der dazugehörigen zweiten Seitenwand (5 beziehungsweise 4) geformt ist / sind.

7. Das Gehäuse nach Patentanspruch 3, 4, 5 oder 6 ist **dadurch gekennzeichnet, dass** die erste(n) und/oder zweite(n) Abdeckrippe(n) (17, 21) an einer aufrecht stehenden Abdeckwand (32, 31) geformt ist/sind und im rechten Winkel zu dieser Seitenwand in der äußeren Richtung des Deckels (16) verläuft / verlaufen.

8. Das Gehäuse nach Patentanspruch 7 ist **dadurch gekennzeichnet, dass** die Abdeckrippe(n) (17, 21) an der Abdeckwand (32, 31) geformt ist/sind.

9. Das Gehäuse nach einem der Patentansprüche 3-8 ist **dadurch gekennzeichnet, dass** die zweite(n) Abdeckrippe(n) (21) im rechten Winkel zu der dazugehörigen Seitenwand (31) in der äußeren Richtung des Deckels (16) verläuft / verlaufen und auf beiden Seiten (27, 28) an der freien, nach außen gerichteten Kante abgeschrägt oder abgerundet ist/sind.

10. Das Gehäuse nach Patentanspruch 9 ist **dadurch gekennzeichnet, dass** die abgeschrägte oder abgerundete Oberfläche (27), die zur Unterseite des Deckels orientiert ist, einen größeren Winkel (α) mit dem nach innen gerichteten rechten Winkel zur freien, nach außen gerichteten Kante der ersten Abdeckrippe(n) (17) bildet, als die abgeschrägte oder abgerundete Oberfläche (28;β), die in die Richtung der Oberseite des Deckels orientiert ist.

11. Das Gehäuse nach einem der Patentansprüche 1-10 ist **dadurch gekennzeichnet, dass** die Scharnierelemente (24, 25) auch an den ersten Seitenwänden (2, 3) auf der gegenüberliegenden Seite des Behälters (1) angebracht sind, und diese Scharnierelemente (24, 25) mit den Scharnierelementen (9, 10) des Deckels (16) zusammenwirken können.

12. Das Gehäuse nach Patentanspruch 11 ist **dadurch gekennzeichnet, dass** der Gelenkpunkt des Deckels (16) durch einen Stift (7, 8) geformt ist, der auf der dazugehörigen ersten Seitenwand (2, 3) des Behälters (1) montiert ist und in einem Loch (10) drehbar aufgenommen ist, das sich in einer dazugehörigen senkrechten Abdeckseitenwand (22, 23) befindet.

13. Das Gehäuse nach Patentanspruch 11 ist **dadurch gekennzeichnet, dass** eine nach außen offene Aussparung in der Abdeckseitenwand gebildet ist, die mit einem Loch für das Scharnierloch versehen ist, und die Tiefe der Aussparung kleiner als die Dicke der Abdeckseitenwand ist und die Aussparung von dem Loch in Richtung zur nächstgelegenen Abdeckseitenwand verläuft, die in einem rechten Winkel zur genannten Abdeckseitenwand verläuft.

14. Das Gehäuse nach einem der Patentansprüche 1-13 ist **dadurch gekennzeichnet, dass** die obere Fläche des Deckels (16), in einem möglichst großen Abstand zum Scharnierstift, mit einer Reihe von kerbenförmigen Aussparungen versehen wird, die parallel zum Scharnierstift verlaufen und durch Verbindungswände voneinander getrennt sind (34, 35).

15. Das Gehäuse nach Patentanspruch 14 ist **dadurch gekennzeichnet, dass** dieser Teil der oberen Abdeckwand, die an die langlochförmigen Aussparungen grenzt, schräg nach innen verläuft.

16. Das Gehäuse nach Patentanspruch 14 oder 15 ist **dadurch gekennzeichnet, dass** dieser Teil der oberen Abdeckwand, die an die langlochförmigen Aussparungen grenzt, eine nach innen gebogene Form hat.

17. Das Gehäuse nach einem der vorhergehenden Ansprüche ist **dadurch gekennzeichnet, dass** der Deckel (16) elastisch verformbar ist, zumindest in Richtung der ersten Abdeckrippe(n) (17).

## Revendications

1. Armoire pour le logement de composants électriques, comprenant un plateau (1) ayant deux premières parois latérales (2, 3) situées en face l'une de l'autre et deux secondes parois latérales (4, 5) s'étendant de manière transversale aux premières parois latérales, un couvercle (16) relié à articulation à l'une des premières parois latérales, les points d'articulation (7, 8) étant à une distance d'une des secondes parois latérales (4) qui est inférieure à la distance entre les secondes parois latérales, et un bord d'étanchéité continu déformable élastiquement (11, 14, 15, 18) qui s'étend à une certaine distance des parois latérales (2, 3, 4, 5) et est orienté vers le couvercle (16) et qui est en contact d'étanchéité avec le couvercle (16) lorsque celui-ci est fermé, la distance depuis les points d'articulation (7, 8) vers la seconde paroi latérale (4) la plus proche étant inférieure à la distance depuis le bord d'étanchéité (11, 14, 15, 18) vers ladite seconde paroi latérale (4), **caractérisé en ce que** des premières arêtes de plateau (12, 13) sont présentes, lesquelles sont fixées par rapport au plateau et s'étendent parallèlement à et sont essentiellement réparties sur la longueur d'une section de bord d'étanchéité (14), laquelle section s'étend parallèlement à et le plus près de la seconde paroi latérale (5) située le plus loin de et en face des points d'articulation et **en ce que** le couvercle (16) est pourvu de premières arêtes de couvercle (17) qui s'engagent, lorsque le couvercle (16) est fermé, derrière les arêtes de plateau (12, 13) de manière libérable et poussent lors de l'engagement le couvercle contre le bord d'étanchéité (11, 14, 15, 18) pour produire un joint d'etanchéité.

2. Armoire selon la revendication 1, **caractérisé en ce que** les points d'articulation (7, 8) sont constitués d'une broche (7, 8, 24, 25) moulée sur le plateau (1) ou le couvercle (16) et d'un orifice (9, 10) prévu dans le couvercle (16), respectivement le plateau (1), pour loger la broche (7, 8, 24, 25) à rotation.

3. Armoire selon la revendication 1 ou 2, **caractérisé en ce qu'**une seconde série d'arêtes de plateau (19, 20), correspondant à la première série, est agencée près de la section du bord d'étanchéité (15) qui s'étend le long de la seconde paroi latérale (4) située le plus près des points d'articulation (7, 8) et une seconde série d'arêtes de couvercle (21) s'engageant derrière lesdites arêtes de plateau (19, 20) de manière libérable lorsque le couvercle (16) est fermé.

4. Armoire selon la revendication 1, 2 ou 3, **caractérisé en ce que** les arêtes de plateau et/ou les arêtes de couvercle sont combinées pour pourvoir une ou plusieurs sections d'arête de plateau ou sections d'arête de couvercle réparties uniformément sur la longueur du bord d'étanchéité.

5. Armoire selon la revendication 1, 2, 3 ou 4, **caractérisé en ce que** l'/les arête(s) de plateau (12, 13 et 19, 20, respectivement) est/sont reliée(s) à la seconde paroi latérale associée (4 et 5, respectivement) et s'étend(ent) perpendiculairement à cette paroi latérale vers l'intérieur du plateau (1).

6. Armoire selon la revendication 5, **caractérisé en ce que** l'/les arête(s) de plateau (12, 13 et 19, 20, respectivement) est/sont moulée(s) sur la seconde paroi latérale associée (5 et 4, respectivement).

7. Armoire selon la revendication 3, 4, 5 ou 6, **caractérisé en ce que** la/les première(s) et/ou seconde(s) arête(s) de couvercle (17, 21) est/sont moulée(s) sur une paroi de couvercle mis debout (32, 31) et s'étend(ent) perpendiculairement à cette paroi latérale vers l'extérieur du couvercle (16).

8. Armoire selon la revendication 7, **caractérisé en ce que** l'/les arête(s) de couvercle (17, 21) est/sont moulée(s) sur la paroi de couvercle (32, 31).

9. Armoire selon l'une des revendications 3 à 8, **caractérisé en ce que** la/les seconde(s) arête(s) de couvercle (21) s'étend(ent) perpendiculairement à la paroi latérale associée (31) vers l'extérieur du couvercle (6) et est/sont chanfreinée(s) ou arrondie(s) des deux côtés (27, 28) au niveau du bord libre tourné vers l'extérieur.

10. Armoire selon la revendication 9, **caractérisé en ce que** la surface chanfreinée ou arrondie (27) orientée vers la face inférieure du couvercle englobe un angle (α) plus grand dirigé vers l'intérieur, perpendiculaire au bord libre tourné vers l'extérieur, de la/des première(s) arête(s) de couvercle (17) que la surface chanfreinée ou arrondie (28 ; β) orientée vers le dessus du couvercle.

11. Armoire selon l'une des revendications 1 à 10, **caractérisé en ce que** des éléments d'articulation (24, 25) sont également montés sur les premières parois latérales (2, 3) du côté opposé du plateau (1), lesquels éléments d'articulation (24, 25) sont capables d'interagir avec les éléments d'articulation (9, 10) du couvercle (16).

12. Armoire selon la revendication 11, **caractérisé en ce que** le point d'articulation du couvercle (16) est formé par une broche (7, 8) qui est montée sur la première paroi latérale associée (2, 3) du plateau (1) et est logée à rotation dans un orifice (10) dans une paroi latérale de couvercle mis debout associée (22, 23).

13. Armoire selon la revendication 11, **caractérisé en ce qu'**une cavité qui est ouvert vers l'extérieur est réalisé dans la paroi latérale de couvercle pourvue de l'orifice d'articulation, la profondeur de la cavité étant inférieure à l'épaisseur de la paroi latérale de couvercle et la cavité s'étendant depuis l'orifice dans la direction de la paroi latérale de couvercle la plus proche s'étendant perpendiculairement à ladite paroi latérale de couvercle.

14. Armoire selon l'une des revendications 1 à 13, **caractérisé en ce que** la surface supérieure du couvercle (16) est pourvue, à une distance aussi grande que possible de la broche d'articulation, d'une rangée d'espaces en forme de fente qui s'étendent parallèlement à la broche d'articulation et sont séparés les uns des autres par des parois de jonction (34, 35).

15. Armoire selon la revendication 14, **caractérisé en ce que** la partie de la paroi supérieure de couvercle qui est contiguë aux espaces en forme de fente s'étend de manière oblique vers l'intérieur.

16. Armoire selon la revendication 14 ou 15, **caractérisé en ce que** la partie de la paroi supérieure de couvercle qui est contiguë aux espaces en forme de fente possède une forme courbée vers l'intérieur.

17. Armoire selon l'une des revendications précédentes, **caractérisé en ce que** le couvercle (16) est déformable élastiquement au moins dans la direction de la/des première(s) arête(s) de couvercle (17).
